# EUROPEAN PATENT APPLICATION

(11) **EP 2 448 207 A1**
(43) Date of publication of application: **02.05.2012**
(21) Application number: 09847742.5
(22) Date of filing: 25.12.2009
(51) Int. Cl.: H04L 29/06

(54) **METHOD, SYSTEM AND NETWORK SIDE DEVICE FOR TRANSMITTING CONTROL INFORMATION OF MULTIMEDIA BROADCAST MULTICAST SERVICE**

(30) Priority: 30.07.2009 CN 200910159077
(71) Applicant: ZTE Corporation, Shenzhen, Guangdong 518057 (CN)
(72) Inventor: AI, Jianxun, Shenzhen Guangdong 518057 (CN); MAO, Lei, Shenzhen Guangdong 518057 (CN)
(74) Representative: Manitz, Finsterwald & Partner GbR
(86) International application number: PCT/CN2009/076095
(87) International publication number: WO 2011/011956

(57) **Abstract**

The invention discloses a method for transmitting control information of a multimedia broadcast multicast service (MBMS). A network side device indicates to a UE (User Equipment) the mapping information between information of each area and each MCCH (Multicast control channel), and the network side device may also indicate the area information of each MBMS to the UE, or the UE obtains the area information of the MBMS in a preset way; such, when the UE needs to receive a certain MBMS, the UE obtains the MCCH corresponding to the area information of the MBMS according to the area information of the MBMS and the mapping relationship between information of each area and each MCCH, and receives the configuration information of the MBMS in the MCCH. The invention also discloses a system and device for transmitting control information of a MBMS. By the invention, UE may accurately obtain the radio interface resources for sending the service.

## Description

### Technical Field

The present invention relates to a LTE (Long Term Evolution) system, and in particular, to a method, system and network side device for transmitting control information of a MBMS (Multimedia Broadcast Multicast Service).

### Background of the Related Art

3GPP (3rd Generation Partnership Project) initiates the work group for LTE study to study and design the advanced 3.9G of the third generation mobile telecommunication technology, i.e. the advanced next generation network of 3G, in 2005.

In order to use sufficiently mobile network resources, 3GPP provides the MBMS service, that is, provides a point-to-multipoint service with one data source transmitting data to a plurality of users in a mobile network, thus achieving the sharing of network resources and improving the utilization ratio of network resources, especially for the cherish air interface resources. The MBMS technology studied in LTE network is called as E-MBMS (Evolved MBMS).

In LTE FDD (Frequency Division Duplex) and LTE TDD (Time Division Duplex), radio frame is divided into MBSFN (Multi-Broadcast Single Frequency Network) frame and Non-MBSFN frame in a mixed carrier, i.e. both multicast service and unicast service are on the carrier. Wherein, the MBSFN frame is used to bear multicast services, for example broadcasting services; the Non-MBSFN frame, i.e. the unicast frame, is used to bear unicast services, for example common voice services. Part of the subframes in the MBSFN frame adopts a MBSFN transmitting mode, i.e. the subframes in each MBSFN frame are further divided into MBSFN subframes and Non-MBSFN subframes. Wherein, Non-MBSFN subframes do not use the MBSFN transmitting mode, but use a unicast transmitting mode.

In the existing LTE technology, the logical channel of the MBMS service is the MTCH (Multimedia broadcasting multicast service point-to-multipoint Traffic Channel), each of which corresponds to a session of the MBMS service. A plurality of MTCHs may be mapped to the same transmission channel, i.e. a MCH (Multicast channel); one or more MCHs are mapped to the same physical channel, i.e. a PMCH (Physical Multicast channel). One PHCH is constituted by a group of MBSFN subframes.

In the existing LTE technology, the concept of MBSFN area (MBMS single frequency network area) is also introduced. In a MBSFN area, the MBMS service is transmitted by way of a MBSFN single frequency network. All the cells in the same MBSFN area use the same resources, content and time to synchronize, and send completely identical physical signals to receive the receiving gain of the UE. A MTCH is mapped to a MCH and then mapped to a PMCH, all of which may transmit by way of MBSFN. One or more PMCHs may be configured in one MBSFN area, and one PMCH may bear one ore more MCHs. Preferably, one PMCH bears one MCH.

Logical channel is a MCCH (Multicast control channel), which bears the configuration information of each MCH and/or PMCH in one or more MBSFN Areas, comprising MBSFN subframe configuration, modulation coding scheme of each PMCH channel configuration and so on.

MCCH channel also bears the configuration information of a service, comprising service identifier, session identifier, state, LCID (Logical Channel ID) and so on. After obtaining the information of a specific service by receiving the MCCH, the UE begins to receive data of the service in a MCH. The configuration information of the MCCH is transmitted in broadcast channels. If there are a plurality of MCCHs, each MCCH corresponds to a set of configuration information in a broadcast message.

The relationship between a MBSFN Area and a SA (Service Area) is: SA is mapped to a set of cells in a radio access network, and these cells belong to one or more MBSFN areas, that is to say, one SA may be mapped to a plurality of MBSFN areas. One cell may belong to a plurality of MBSFN areas or a plurality of service areas, and then a plurality of multicast channels belonging to different MBSFN Areas may be configured in one cell. According to the different implementing ways, one MCCH may be configured for one MBSFN area, or one MCCH is configured for a plurality of MBSFN areas, in which case, services belonging to the MBSFN area all indicate their configuration information in the corresponding MCCH channel. While in one cell, resources belonging to different MBSFN areas are independent from each other, i.e. a plurality of PMCH sets exist for a plurality of MBSFN areas, and each PMCH set corresponds to one MBSFN area.

When a MBMS is established, the core network will indicate to the access network device the service area which the access network device needs to transmit. The access network may determine a certain service is transmitted by which cells through the mapping relationship of SAs to MBSFN areas to cells (by pre-configuring). In view of the fact that one cell may belong to a plurality of service areas, one service may be transmitted in PMCHs of a plurality of MBSFN areas in one cell.

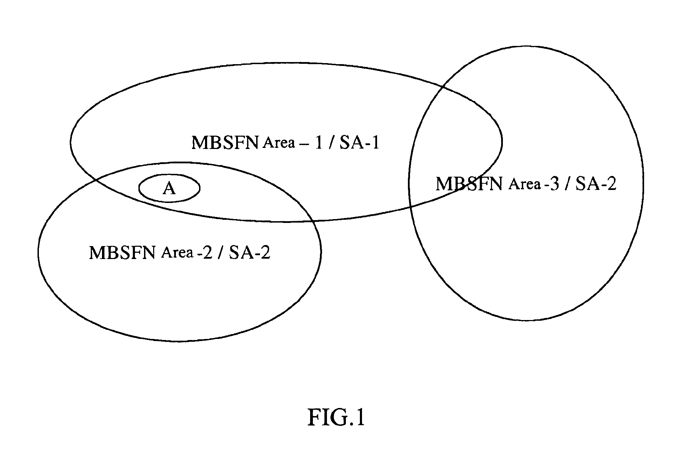

The relations of SAs (service areas), MBSFN areas and cells are shown in FIG.1. Service area SA-1 corresponds to MBSFN areal, service area SA-2 corresponds to MBSFN area 2 and 3. Cell A belongs to MBSFN area 1 and 2, and meanwhile, cell A also belongs to SA-1 and SA-2.

As part of the MBMS service flow, a UE needs to receive a MBMS announcement before receiving a service. In the existing technology, the MBMS announcement comprises service identifier (TMGI), starting time and media coding format and other contents. Network side device usually sends the MBMS announcement through the format of an electronic service guide (ESD or ESG). The network side device is usually a core network device.

When a cell belongs to a plurality of MBSFN areas and there exist several MCCHs, each of which corresponds to one or more MBSFN areas, a UE needs to receive all the MCCHs in the cell before receiving a service to know in which MCCH the MBMS needed to be received by the UE is born. And, in view of the fact that the MCCH can not bear any information related to the service before the service is started, then even though the UE has received all the MCCHs, the UE is still unable to know in which MBSFN area the service will be sent, or other, the UE does not know in which MCCH the configuration information of the service will be born.

### Summary of the Invention

The technical problem to be solved in the invention is to provide a method, system and network side device for transmitting control information of a MBMS, to indicate to UEs the information of MCCHs bearing the configuration information of each MBMS.

To solve the above problem, the invention discloses a method for transmitting control information of a multimedia broadcast multicast service, comprising:
a network side device issuing mapping information between a service area (service area) and a MCCH (Multicast control channel) and mapping information between a MBMS (Multimedia Broadcast Multicast Service) and the SA to a UE (User Equipment), wherein, the MCCH bears configuration information of the MBMS corresponding to the SA corresponding to the MCCH.

Furthermore, in the above method, the network side device issues the mapping information between the SA and the MCCH to the UE through a system message, a MCCH message or a dedicated signaling message.

Wherein, the network side device issues the mapping information between the MBMS and the SA to the UE through a MBMS announcement, HTTP (Hyper Text Transport Protocol) or a SMS (short message).

The UE receives the mapping information between the SA and the MCCH and the mapping information between the MBMS and the SA, and when the UE is about to receive a certain MBMS, the UE obtains information of the MCCH bearing configuration information of the MBMS according to the mapping information between the SA and the MCCH and the mapping information between the MBMS and the SA, and receives the configuration information of the MBMS in the MCCH.

Furthermore, in the above method, the network side device issues the mapping information between the SA and the MCCH in one of following ways:
issuing configuration information of each MCCH in system messages, wherein, the configuration information of the MCCH comprises at least identifier information of one or more SAs corresponding to the MCCH;
issuing configuration information of each MBSFN area in system messages, wherein, the configuration information of the MBSFN area comprises information of the MCCH corresponding to the MBSFN area and identifier information of one or more SAs corresponding to the MBSFN area;
issuing identifier information of one or more SAs corresponding to a present MCCH in MCCH messages;
issuing identifier information of one or more SAs corresponding to each MCCH in a cell in MCCH messages;
issuing identifier information of one or more SAs corresponding to each MCCH in dedicated signaling messages;
issuing configuration information of each MBSFN area in dedicated signaling messages, wherein, the configuration information of the MBSFN area comprises the information of the MCCH corresponding to the MBSFN area and identifier information of one or more SAs corresponding to the MBSFN area;
carrying information of the MBSFN area corresponding to each SA in dedicated signaling messages, wherein, the information of the MBSFN area comprises the information of the MCCH corresponding to the MBSFN area;
carrying the information MCCH corresponding to each SA in dedicated signaling messages.

Wherein, the mapping information between the MCCH and the MBSFN area is displayed or implicitly indicated in the configuration information of the MCCH.

The invention also provides a method for transmitting control information of a multimedia broadcast multicast service, comprising:
a UE obtaining mapping information between a MBMS (Multimedia Broadcast Multicast Service) and a SA (service area) by pre-configuration, a network side device issuing mapping information between the SA and a MCCH (Multicast control channel) to the UE, wherein, the MCCH bears configuration information of the MBMS corresponding to the SA corresponding to the MCCH.

Furthermore, in the above method, the network side device issues the mapping information between the SA and the MCCH to the UE through a system message, a MCCH message or a dedicated signaling message.

Wherein, the UE receives the mapping information between the SA and the MCCH, and when the UE is about to receive a certain MBMS, the UE obtains information of the MCCH bearing configuration information of the MBMS according to the received mapping information between the SA and the MCCH and the preconfigured mapping information between the MBMS and the SA, and receives the configuration information of the MBMS in the MCCH.

The invention also discloses a system for transmitting control information of multimedia broadcast multicast service, comprising a network side device and a UE (user equipment), wherein,
the network side device is configured to issue mapping information between each service area (SA) and a MCCH (Multicast control channel) and mapping information between a MBMS (Multimedia Broadcast Multicast Service) and the SA to the UE, wherein, the MCCH bears configuration information of the MBMS corresponding to the SA corresponding to the MCCH;
the UE is configured to receive the mapping information between the SA and the MCCH and the mapping information between the MBMS and the SA, obtain information of the MCCH bearing configuration information of the MBMS, and receive the configuration information of the MBMS in the MCCH.

Furthermore, in the above system, the network side device issues the mapping information between the SA and the MCCH to the UE through a system message, a MCCH message or a dedicated signaling message.

Wherein, the network side device issues the mapping information between MBMS and SA to the UE through a MBMS announcement, HTTP (Hyper Text Transport Protocol) or a SMS (short message).

Furthermore, in the above system, the network side device issues the mapping information between the SA and the MCCH in one of following ways:
issuing configuration information of each MCCH in system messages, wherein, the configuration information of the MCCH comprises at least identifier information of one or more SAs corresponding to the MCCH;
issuing configuration information of each MBSFN area in system messages, wherein, the configuration information of the MBSFN area comprises information of the MCCH corresponding to the MBSFN area and identifier information of one or more SAs corresponding to the MBSFN area;
issuing identifier information of one or more SAs corresponding to a present MCCH in MCCH messages;
issuing identifier information of one or more SAs corresponding to each MCCH in a cell in MCCH messages;
issuing identifier information of one or more SAs corresponding to each MCCH in dedicated signaling messages;
issuing configuration information of each MBSFN area in dedicated signaling messages, wherein, the configuration information of the MBSFN area comprises MCCH information corresponding to the MBSFN area and identifier information of one or more SAs corresponding to the MBSFN area;
issuing information of the MBSFN area corresponding to each SA in dedicated signaling messages, wherein, the information of the MBSFN area comprises MCCH information corresponding to the MBSFN area;
issuing MCCH information corresponding to each SA in dedicated signaling messages.

The invention also discloses a system for transmitting control information of a multimedia broadcast multicast service, comprising a network side device and a UE (user equipment), wherein,
the network side device is configured to issue mapping information between each service area (SA) and a MCCH (Multicast control channel) to the UE, wherein, the MCCH bears configuration information of the MBMS corresponding to the SA corresponding to the MCCH;
the UE is configured to receive the mapping information between the SA and the MCCH, and obtain information of the MCCH bearing configuration information of the MBMS by combining the received mapping information between the SA and the MCCH and the mapping information between the MBMS and the SA acquired by the UE through pre-configuration, and receive the configuration information of the MBMS in the MCCH.

Furthermore, in the above system, the network side device issues the mapping information between the SA and the MCCH to the UE through a system message, a MCCH message or a dedicated signaling message.

The invention also discloses a network side device for transmitting control information of a multimedia broadcast multicast service, comprising a configuring unit and an issuing unit, wherein,
the configuring unit is configured to configure mapping information between each service area (SA) and a MCCH, wherein, the MCCH bears configuration information of the MBMS corresponding to the SA corresponding to the MCCH;
the issuing unit is configured to issue the mapping information between each SA and the MCCH in the configuring unit to UEs (user equipments) respectively.

Furthermore, in the above network side device, the issuing unit issues the mapping information between the SA and the MCCH through a system message, a control message or a dedicated signaling message.

Wherein, the configuring unit is further configured to configure mapping information between each MBMS and the SA;
the issuing unit is further configured to issue the mapping information between the MBMS and the SA to the UE through a MBMS announcement, HTTP (Hyper Text Transport Protocol) or a SMS (short message).

Furthermore, in the above network side device, the issuing unit issues the mapping information between the SA and the MCCH in one of following ways:
issuing configuration information of each MCCH in system messages, wherein, the configuration information of the MCCH comprises at least identifier information of one or more SAs corresponding to the MCCH;
issuing configuration information of each MBSFN area in system messages, wherein, the configuration information of the MBSFN area comprises information of the MCCH corresponding to the MBSFN area and identifier information of one or more SAs corresponding to the MBSFN area;
issuing identifier information of one or more SAs corresponding to a present MCCH in MCCH messages;
issuing identifier information of one or more SAs corresponding to each MCCH in a cell in MCCH messages;
issuing identifier information of one or more SAs corresponding to each MCCH in dedicated signaling messages;
issuing configuration information of each MBSFN area in dedicated signaling messages, wherein, the configuration information of the MBSFN area comprises the information of the MCCH corresponding to the MBSFN area and identifier information of one or more SAs corresponding to the MBSFN area;
issuing information of the MBSFN area corresponding to each SA in dedicated signaling messages, wherein, the information of the MBSFN area comprises the information of the MCCH corresponding to the MBSFN area;
carrying the information of the MCCH corresponding to each SA in dedicated signaling messages.

By using the technical scheme in the invention, the service area for each service may be indicated to UE so that the UE may obtain the radio interface resources for sending the service accurately.

### Brief Description of Drawings

FIG.1 is a schematic diagram of the mapping relationship of the MBSFN area, the service area and the cell.
FIG.2 is a schematic diagram of the structure of the system for transmitting control information of a MBMS in an example.
FIG.3 is a flowchart of transmitting control information of a MBMS in an example.

### Preferred Embodiments of the Present Invention

The main concept of the invention is: a network side device indicates to a UE the mapping relationship between information of each area and each MCCH. Preferably, the network side device may further indicate the area information of each MBMS, or the UE obtains the area information of the MBMS through a preset way. Thus, when the UE needs to receive a certain MBMS, the UE obtains the MCCH corresponding to the area information of the MBMS service according to the area information of the MBMS and the mapping relationship between information of each area and each MCCH, and receives the configuration information of the MBMS in the MCCH. Wherein, the area information of each MBMS refers to the one or more service areas corresponding to each MBMS, or one or more MBSFN areas corresponding to each MBMS; the network side issues the mapping relationship between the information of each area and each MCCH through a control message, such as a MCCH message or a BCCH (broadcast control channel) message.

The inventive technical scheme will be described in detail below with reference to drawings and specific examples.

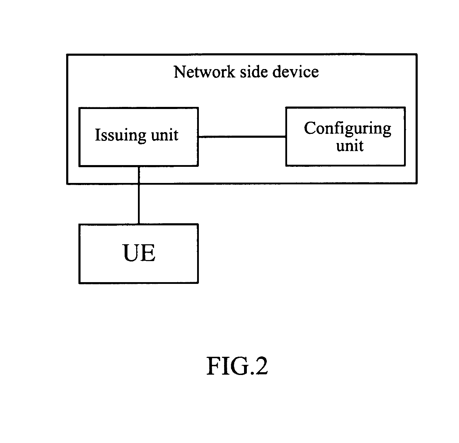

A system for transmitting control information of a MBMS, as shown in FIG.2, comprises a network side device and a UE (user equipment), wherein, the network side device further comprises a configuring unit and an issuing unit. The functions of each component will be described below.

The network side device is configured to issue mapping information between the identifier information of each SA and each MCCH to the UE;
wherein, the configuring unit is configured to configure one or more MBSFN areas for each cell, configure the identifier information of one or more SAs for each MBSFN area, and configure one or more MCCHs for the cell, wherein, each MCCH corresponds to one or more MBSFN areas, and the identifier information of the SA refers to the identifier information which can uniquely identify the SA.

Specifically, the configuring unit may configure a group of configuration information for each MBSFN area, and the configuration information comprises the configuration information of MCCH corresponding to the MBSFN area, and one or more SA IDs corresponding to the MBSFN area, such that the identifier information of SA corresponding to MCCH corresponding to the MBSFN area may be acquired.

The issuing unit is configured to issue the mapping information between the identifier information of each SA and each MCCH in the configuring unit to the UE;
specifically, the issuing unit may issue the mapping relationship between the identifier information of each SA and each MCCH in any one of the following ways:
1. carrying the configuration information of each MCCH in system messages, wherein, the identifier information of one or more SAs corresponding to the MCCH is carried in the configuration information of each MCCH, in which case, the configuration information of the MCCH displays or implicitly indicates the corresponding relationship between the MCCH and the MBSFN area;
2. carrying the configuration information of each MBSFN area in system messages to display or implicitly indicate the information of the MCCH corresponding to each MBSFN area and the identifier information of one or more SAs corresponding to the MBSFN area, thereby indicating the identifier information of the SA corresponding to the MCCH corresponding to each MBSFN area;
3. carrying identifier information of one or more SAs corresponding to the present MCCH in MCCH messages;
4. carrying identifier information of one or more SAs corresponding to each MCCH in a cell in MCCH messages;
5. carrying the identifier information of one or more SAs corresponding to each MCCH in dedicated signaling messages; or carrying configuration information of each MBSFN area to indicate the identifier information of the SA corresponding to the MCCH corresponding to each MBSFN area. Wherein, the configuration information of the MBSFN area comprises the information of the MCCH corresponding to the MBSFN area and the identifier information of one or more SAs corresponding to the MBSFN area; or, carrying the information of the MBSFN area corresponding to each SA to indicate the information of the MCCH corresponding to each SA, wherein, the information of the MBSFN area comprises the information of the MCCH corresponding to the MBSFN area; or carrying the information of the MCCH corresponding to each SA in dedicated signaling messages.

The dedicated signaling message refers to a signaling message for specified UEs sent by the network side device through a dedicated control channel or a shared control channel.

In other examples, the above network side device is further used to issue the identifier information of the SA corresponding to each MBMS to the UE, in which case, the network side device further comprises the second configuring unit and the second issuing unit;
the second configuring unit, which is used to configure the identifier information of the SA corresponding to each MBMS;
the second issuing unit may issue the identifier information of the SA corresponding to each MBMS to the UE through a MBMS announcement, HTTP (Hyper Text Transport Protocol) or a SMS (short message). Preferably, the second issuing unit issues the identifier information of the SA corresponding to each MBMS to the UE in they form of an electronic service guide.

The above network side device refers to the general term of an access network and a core network (comprising a service unit). When the above network side device is two network element devices, the network element device one is used to issue the mapping relationship between the identifier information of each SA and each MCCH, and is preferably a network element in the access network, such as, a radio network controller, a base station network element and so on. The network element device two is used to issue the mapping relationship between each MBMS and SA, and is preferably a network element of the core network, especially a service network element, such as a BMSC (broadcast multicast service center), a short message center and so on.

The UE is used to receive the mapping information between the identifier information of each SA and each MCCH, and obtain the information of the MCCH bearing configuration information of each MBMS by combining the received mapping information between the SA and the MCCH and the obtained identifier information of the SA corresponding to each MBMS;
wherein, the UE may obtain the identifier information of the SA corresponding to each MBMS by receiving a MBMS announcement, HTTP or a SMS issued by the network side device, and may also obtain the identifier information of the SA corresponding to each MBMS by way of pre-configuration.

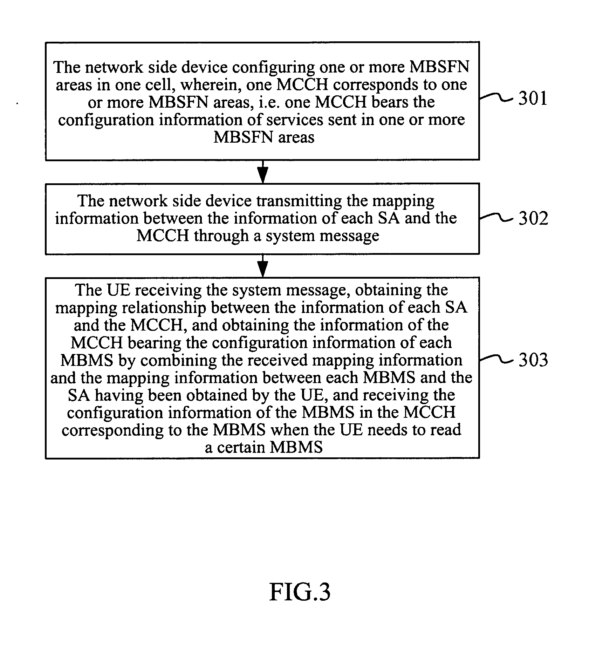

The process of the above system transmitting control information of a MBMS will be described below. As shown in FIG.3, the process comprises the following steps.

Step 301, the network side device configures one or more MBSFN areas in one cell. Wherein, one MCCH corresponds to one or more MBSFN areas, i.e. one MCCH bears the configuration information of services sent in one or more MBSFN areas.

Step 302, the network side device transmits the mapping information between the identifier information of each SA and MCCH through system messages.

In the present example, the network side device carries the configuration information of the MBSFN area in system messages to indicate the mapping information between the identifier information of each SA and the MCCH. Wherein, the configuration information configured by the network side device for each MBSFN area comprises the configuration information of the MCCH corresponding to the MBSFN area and the information of one or more SAs corresponding to the MBSFN area, thereby indicating the information of the SA corresponding to the MCCH corresponding to the MBSFN area. Preferably, an SA ID (identifier) is used to indicate the information of the service area.

Specifically, the format of the configuration information of the MBSFN area is as follows, and in a preferred example, the network side device may send the configuration information of the MBSFN area through a system message SIB12:

```
 MBSFN-AreaInfo ::= SEQUENCE { --- MBSFN area configuration information
     mbsfn-AreaId INTEGER
 (1..maxMBSFN-Area), -- MBSFN area identifier
     mcch-Config SEQUENCE {
     -- MCCH configuration information
      },
     SA-ID-List SEQUENCE (SIZE
 (1..maxSANumberPerMBSFNArea)) of SEQUENCE
     SA-ID INTEGER,
     -- service area identifier
     },
 }
```

Step 303, the UE receives the system message, obtains the mapping relationship between the identifier information of each SA and the MCCH, and obtain the information of the MCCH bearing configuration information of each MBMS by combining the received mapping information and the mapping information between each MBMS and the SA having been obtained by the UE, and receives the configuration information of the MBMS in the MCCH corresponding to the MBMS when the UE needs to read a certain MBMS.

Wherein, the UE acquires the mapping information between the MBMS and the SA by pre-configuration.

In other examples, the above network side devices may issue the identifier information of the SA corresponding to each MBMS (i.e. the corresponding relationship between SA ID and TMGI) to the UE through a MBMS announcement, HTTP or a SMS. Preferably, the identifier information of the SA corresponding to each MBMS is issued by the MBMS announcement in the form of an electronic service guide (ESG or ESD); in this case, the UE obtains the corresponding relationship between each MBMS and the SA by reading the MBMS announcement, HTTP or SMS, and then the UE may obtain the information of the MCCH bearing the configuration information of each MBMS according to the mapping relationship between each SA and the MCCH in the system message. When the UE needs to read a certain MBMS, the UE only needs to receive the configuration information of the MBMS in the MCCH corresponding to the MBMS.

For example, in the mapping relationship of the MBSFN-Area and SA shown in FIG.1, cell A is mapped to MBSFN area-1 and MBSFN area-2, and these two MBSFN areas correspond respectively to areas SA-1 and SA-2. If MBSFN area-1 and MBSFN area-2 are respectively configured with one MCCH in cell A, each MCCH bears the configuration information of the MBMS transmitted in a corresponding MBSFN area.

In this case, the network side device carries the configuration information of MBSFN area 1 and that of MBSFN area 2 in a system message. Wherein, the configuration information of MBSFN area 1 indicates that the SA corresponding to MBSFN area 1 is SA-1; the configuration information of MBSFN area 2 indicates that the SA corresponding to MBSFN area 2 is SA-2. The UE knows the corresponding relationship between the MBSFN area and the SA by reading the above system message.

The network side device may further indicate to the UE in the service announcement that the service areas of the TMGI-1 are SA-1 and SA-3. If the UE needs to receive the service TMGI-1, the UE may know that the MBSFN area corresponding to the service area SA-1 corresponding to the service TMGI-1 is MBSFN area 1 according to the indication of the above system message, i.e. the UE only needs to monitor the MCCH of the MBSFN area-1 to obtain the configuration information of the service TMGI-1, but needs not to monitor the MCCH corresponding to the MBSFN area-2.

The above network side device is the general term of an access network and a core network (comprising a service network element). When the above network side device is two element devices, the element device one is used to issue the mapping relationship between the identifier information of each SA and each MCCH, and is preferably a network element in the access network, such as a radio network controller, a base station network element and so on. The network element device two is used to issue the mapping relationship between each MBMS and the SA, and is preferably a network element of the core network, especially a service network element, such as a BMSC (broadcast multicast service center), a short message center and so on.

It can be seen from the above examples that the technical scheme of the invention avoids the expense of the UE for searching for the configuration information of its required service by reading each MCCH message in the cell, improves the efficiency of the UE for obtaining services, and shortens the time delay of the UE for obtaining the configuration information of the services.

Of course, the invention may have many other embodiments, and those skilled in the art may make various corresponding modifications or verifications according to the invention without deviating from the spirit and substance of the invention. However, any modification, equivalent replacement, or improvement made within the spirit and principle of the invention should be comprised in the protection scope of the attached claims of the invention.

## Claims

1. A method for transmitting control information of a multimedia broadcast multicast service, the method comprising:
a network side device issuing mapping information between a service area and a MCCH (Multicast Control Channel) and mapping information between a MBMS (Multimedia Broadcast Multicast Service) and the SA (Service Area) to a UE (User Equipment), wherein, the MCCH bears configuration information of the MBMS corresponding to the SA corresponding to the MCCH.

2. The method for transmitting control information of a multimedia broadcast multicast service according to claim 1, wherein, the network side device issues the mapping information between the SA and the MCCH to the UE through a system message, a MCCH message or a dedicated signaling message.

3. The method for transmitting control information of a multimedia broadcast multicast service according to claim 1, wherein, the network side device issues the mapping information between the MBMS and the SA to the UE through a MBMS announcement, HTTP (Hyper Text Transport Protocol) or a SMS (short message).

4. The method for transmitting control information of a multimedia broadcast multicast service according to claim 1, 2 or 3, further comprising: the UE receiving the mapping information between the SA and the MCCH and the mapping information between the MBMS and the SA, and when the UE is about to receive a MBMS, the UE obtaining information of the MCCH bearing configuration information of the MBMS according to the mapping information between the SA and the MCCH and the mapping information between the MBMS and the SA, and receiving the configuration information of the MBMS in the MCCH.

5. The method for transmitting control information of a multimedia broadcast multicast service according to claim 1, 2 or 3, wherein, the network side device issues the mapping information between the SA and the MCCH in one of following ways:
issuing configuration information of each MCCH in system messages, wherein, the configuration information of the MCCH comprises at least identifier information of one or more SAs corresponding to the MCCH;
issuing configuration information of each MBSFN (Multi-Broadcast Single Frequency Network) area in system messages, wherein, the configuration information of the MBSFN area comprises information of the MCCH corresponding to the MBSFN area and identifier information of one or more SAs corresponding to the MBSFN area;
issuing identifier information of one or more SAs corresponding to a present MCCH in MCCH messages;
issuing identifier information of one or more SAs corresponding to each MCCH in a cell in MCCH messages;
issuing identifier information of one or more SAs corresponding to each MCCH in dedicated signaling messages;
issuing configuration information of each MBSFN area in dedicated signaling messages, wherein, the configuration information of the MBSFN area comprises the information of the MCCH corresponding to the MBSFN area and identifier information of one or more SAs corresponding to the MBSFN area;
carrying information of the MBSFN area corresponding to each SA in dedicated signaling messages, wherein, the information of the MBSFN area comprises the information of the MCCH corresponding to the MBSFN area;
carrying the information MCCH corresponding to each SA in dedicated signaling messages.

6. The method for transmitting control information of a multimedia broadcast multicast service according to claim 1, 2 or 3, wherein, the mapping information between the MCCH and the MBSFN area is displayed or implicitly indicated in the configuration information of the MCCH.

7. A method for transmitting control information of a multimedia broadcast multicast service, the method comprising:
a UE obtaining mapping information between a MBMS (Multimedia Broadcast Multicast Service) and a SA (service area) by pre-configuration, and receiving mapping information between the SA and a MCCH (Multicast control channel) from a network side, wherein, the MCCH bears configuration information of the MBMS corresponding to the SA corresponding to the MCCH.

8. The method for transmitting control information of a multimedia broadcast multicast service according to claim 7, wherein, the network side device issues the mapping information between the SA and the MCCH to the UE through a system message, a MCCH message or a dedicated signaling message.

9. The method for transmitting control information of a multimedia broadcast multicast service according to claim 7 or 8, further comprising: the UE receiving the mapping information between the SA and the MCCH, and when the UE is about to receive a MBMS, the UE obtaining information of the MCCH bearing configuration information of the MBMS according to the received mapping information between the SA and the MCCH and the preconfigured mapping information between the MBMS and the SA, and receiving the configuration information of the MBMS in the MCCH.

10. A system for transmitting control information of multimedia broadcast multicast service, comprising a network side device and a UE (user equipment), wherein,
the network side device is configured to issue mapping information between each service area (SA) and a MCCH (Multicast control channel) and mapping information between a MBMS (Multimedia Broadcast Multicast Service) and the SA to the UE, wherein, the MCCH bears configuration information of the MBMS corresponding to the SA corresponding to the MCCH;
the UE is configured to receive the mapping information between the SA and the MCCH and the mapping information between the MBMS and the SA, obtain information of the MCCH bearing configuration information of the MBMS, and receive the configuration information of the MBMS in the MCCH.

11. The system for transmitting control information of multimedia broadcast multicast service according to claim 10, wherein, the network side device is further configured to issue the mapping information between the SA and the MCCH to the UE through a system message, a MCCH message or a dedicated signaling message.

12. The system for transmitting control information of multimedia broadcast multicast service according to claim 10, wherein, the network side device is further configured to issue the mapping information between MBMS and SA to the UE through a MBMS announcement, HTTP (Hyper Text Transport Protocol) or a SMS (short message).

13. The system for transmitting control information of multimedia broadcast multicast service according to claim 10, 11 or 12, wherein, the network side device issues the mapping information between the SA and the MCCH in one of following ways:
issuing configuration information of each MCCH in system messages, wherein, the configuration information of the MCCH comprises at least identifier information of one or more SAs corresponding to the MCCH;
issuing configuration information of each MBSFN (Multi-Broadcast Single Frequency Network) area in system messages, wherein, the configuration information of the MBSFN area comprises information of the MCCH corresponding to the MBSFN area and identifier information of one or more SAs corresponding to the MBSFN area;
issuing identifier information of one or more SAs corresponding to a present MCCH in MCCH messages;
issuing identifier information of one or more SAs corresponding to each MCCH in a cell in MCCH messages;
issuing identifier information of one or more SAs corresponding to each MCCH in dedicated signaling messages;
issuing configuration information of each MBSFN area in dedicated signaling messages, wherein, the configuration information of the MBSFN area comprises MCCH information corresponding to the MBSFN area and identifier information of one or more SAs corresponding to the MBSFN area;
issuing information of the MBSFN area corresponding to each SA in dedicated signaling messages, wherein, the information of the MBSFN area comprises MCCH information corresponding to the MBSFN area;
issuing MCCH information corresponding to each SA in dedicated signaling messages.

14. A system for transmitting control information of a multimedia broadcast multicast service, comprising a network side device and a UE (user equipment), wherein,
the network side device is configured to issue mapping information between each service area (SA) and a MCCH (Multicast Control Channel) to the UE, wherein, the MCCH bears configuration information of the MBMS corresponding to the SA corresponding to the MCCH;
the UE is configured to receive the mapping information between the SA and the MCCH, and obtain information of the MCCH bearing configuration information of the MBMS by combining the received mapping information between the SA and the MCCH and the mapping information between the MBMS and the SA acquired by the UE through pre-configuration, and receive the configuration information of the MBMS in the MCCH.

15. The system for transmitting control information of a multimedia broadcast multicast service according to claim 14, wherein, the network side device is further configured to issue the mapping information between the SA and the MCCH to the UE through a system message, a MCCH message or a dedicated signaling message.

16. A network side device for transmitting control information of a multimedia broadcast multicast service, comprising a configuring unit and an issuing unit, wherein,
the configuring unit is configured to configure mapping information between each service area (SA) and a MCCH, wherein, the MCCH bears configuration information of the MBMS corresponding to the SA corresponding to the MCCH;
the issuing unit is configured to issue the mapping information between each SA and the MCCH in the configuring unit to UEs (user equipments) respectively.

17. The network side device for transmitting control information of a multimedia broadcast multicast service according to claim 16, wherein, the issuing unit is further configured to issue the mapping information between the SA and the MCCH through a system message, a control message or a dedicated signaling message.

18. The network side device for transmitting control information of a multimedia broadcast multicast service according to claim 16, wherein, the configuring unit is further configured to configure mapping information between each MBMS and the SA;
the issuing unit is further configured to issue the mapping information between the MBMS and the SA to the UE through a MBMS announcement, HTTP (Hyper Text Transport Protocol) or a SMS (short message).

19. The network side device for transmitting control information of a multimedia broadcast multicast service according to claim 16, 17 or 18, wherein, the issuing unit issues the mapping information between the SA and the MCCH in one of following ways:
issuing configuration information of each MCCH in system messages, wherein, the configuration information of the MCCH comprises at least identifier information of one or more SAs corresponding to the MCCH;
issuing configuration information of each MBSFN area in system messages, wherein, the configuration information of the MBSFN area comprises information of the MCCH corresponding to the MBSFN area and identifier information of one or more SAs corresponding to the MBSFN area;
issuing identifier information of one or more SAs corresponding to a present MCCH in MCCH messages;
issuing identifier information of one or more SAs corresponding to each MCCH in a cell in MCCH messages;
issuing identifier information of one or more SAs corresponding to each MCCH in dedicated signaling messages;
issuing configuration information of each MBSFN area in dedicated signaling messages, wherein, the configuration information of the MBSFN area comprises the information of the MCCH corresponding to the MBSFN area and identifier information of one or more SAs corresponding to the MBSFN area;
issuing information of the MBSFN area corresponding to each SA in dedicated signaling messages, wherein, the information of the MBSFN area comprises the information of the MCCH corresponding to the MBSFN area;
carrying the information of the MCCH corresponding to each SA in dedicated signaling messages.
